# EUROPEAN PATENT SPECIFICATION

(11) **EP 4 354 988 B1**
(45) Date of publication and mention of the grant of the patent: **28.10.2026**
(21) Application number: 22306543.4
(22) Date of filing: 12.10.2022
(51) Int. Cl.: H04W 72/02, H04L 1/1867, H04W 72/40, H04W 74/0808, H04L 5/00

(54) **PACKET-BASED DYNAMIC RESOURCE ALLOCATION**
PAKETBASIERTE DYNAMISCHE RESSOURCENZUWEISUNG
ALLOCATION DYNAMIQUE DE RESSOURCES BASÉE SUR DES PAQUETS

(43) Date of publication of application: 17.04.2024
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: CIOCHINA, Cristina, 35708 RENNES CEDEX 7 (FR); SIBEL, Jean-Christophe, 35708 RENNES CEDEX 7 (FR); GRESSET, Nicolas, 35708 RENNES CEDEX 7 (FR)
(74) Representative: Plasseraud IP

(56) References cited:
- ANONYMOUS: "ETSI TS 102 361-1 V1.2.1: Electromagnetic compatibility and Radio spectrum Matters (ERM); Digital Mobile Radio (DMR) Systems; Part 1: DMR Air Interface (AI) protocol", vol. 102 361-1, no. v1.2.1, 1 January 2006 (2006-01-01), pages 1 - 156, XP002539420, Retrieved from the Internet <URL:http://www.casheimer.com.hk/web/moto/ETSIStandard.pdf> [retrieved on 20090730]
- XIAOMI COMMUNICATIONS: "Discussion on sidelink DRX for unicast", vol. RAN WG2, no. Electronic; 20210809 - 20210827, 6 August 2021 (2021-08-06), XP052034560, Retrieved from the Internet <URL:https://ftp.3gpp.org/tsg_ran/WG2_RL2/TSGR2_115-e/Docs/R2-2107969.zip R2-2107969 eSL Discussion on sidelink DRX for unicast.doc> [retrieved on 20210806]

## Description

The present invention relates to device-to-device communications in wireless communication system.

It relates more precisely to applications which require round trip transmission between two user equipments, that is, applications which require a user equipment to send a response packet in response to a request packet. Such response packet may be referred to as a response packet or a backward packet. The request packet may be referred to as a received packet or a forward packet. Such applications are for example positioning applications, trajectory monitoring applications, robot motion applications, or more generally any control related applications where a timely response from another device is required.

Such applications, also called closed-loop applications have their performance related on the time (RTT) required to perform the round-trip transmission. Low, predictable and stable RTT allows the application to optimize its functioning, since the quality of service perceived by the application, including the effectively experienced RTT, often serves as basis for setting and/or changing the parameters of the system and has a direct impact on different key performance indicators such as the convergence speed of the control algorithms, or on the stability of the system.

Such RTT is an application metric that is not known by the radio access layers. Therefore, control on the RTT is difficult since transmission delay strongly depends on these radio access layers which do not have information on the RTT experienced. For example, when the radio access layer suffers bad radio conditions, some transmission might fail, and some re-transmissions are required. Then it is not possible to know with a very high precision the moment when one packet is successfully received. In that context the RTT measured, which may be near the sum of the PDBs (packet delay budget) of two UEs communicating with one another, is too unstable and thus detrimental to the application performance.

The documents *ETSI TS 102 361-1 V1.2.1 Electromagnetic compatibility and Radio spectrum Matters (ERM): Digital Mobile Radio (DMR) Systems; Part 1* : *DMR Air Interface (AI) protocol,* and *"*Discussion on sidelink DRX for unicast" 3GPP draft; R2-2107969, 3RD GENERATION PARTNERSHIP PROJECT (3GPP); MOBILE COMPETENCE CENTRE*"* are known, but fail to improve the situation.

The present invention aims at improving the situation.

To that end, the invention relates to transmit by a user equipment a response packet (BWP) in response to a received packet (FWP) received from another user equipment in a D2D communication, comprising:
Receive from the another user equipment by the user equipment the received packet (FWP);
Perform by the user equipment radio resource selection used to transmit the response packet (BWP), the radio resources selected are selected among radio resources in a selection window such as the delay between the reception of the received packet and a last radio resource of the radio resources in the selection window is dependent on a time duration related to the received packet (FWP);
Send by the user equipment to the another user equipment the response packet using at least one resource among the selected radio resources.

When the user equipment (also referred to as the responding user equipment) receives the received packet (also referred to as FWP or forward packet), the user equipment generates a response packet (also referred to as BWP or backward packet). To send this BWP, resources are selected. This radio resources selection is performed by applying a supplementary constraint on the selection compared to a classical radio resource selection. Indeed, in a classical radio resource selection a Packet Delay Budget (PDB) is used to induce a time limit after which no radio resources are selected, that is, all the radio resources are selected in a selection window with a size corresponding to the PDB and associated with the BWP, for example starting at the generation of the packet BWP. This PDB is given by the application layer, and does not depend on a time duration related to the received packet (FWP), for example, on the time duration between the generation of the FWP and its transmission by the another user equipment.

Whereas in the invention the radio resources are selected in a selection window with a size dependent on the time duration related to the received packet (FWP). The selection window may start, like in a classical radio resource selection, at the generation or after the generation of the BWP or in non-classical way for instance before the generation of the BWP. This constraint may enable to adapt the size of the selection window according to time duration related to the FWP and thus to adapt the size of the selection window to adjust the RTT (or eventually another or equivalent metric) to a target RTT. Advantageously, the selection window is a reduced selection window or at least finishes before a selection window defined in a classical radio resource selection, that is, at least a last radio resource in the selection window that would be defined in a classical radio resource selection cannot be candidate for the selection according to the invention. Therefore, this provides radio resources for transmission and retransmission in a more condensed time. By reducing the selection window or at least finishing it before a classical selection window, that is, by reducing the delay between the reception (or eventually the generation) of the FWP and the last possible radio resource that can be used by the user equipment to send the BWP, it enables to reduce the RTT (that is the delay starting from the generation of the FWP by the another user equipment - also referred to as the requesting user equipment - to the reception of the BWP by the another user equipment), and thus stabilize the RTT or at least reduce its instability.

The selection window may as well start before the generation of the BWP, for example based on a flag associated with the reception of the FWP, and potentially before decoding the contents of the FWP and/or before generating the contents of the BWP. Advantageously, the selection window is an advanced selection window starting before the classical radio resource selection and thus comprising radio resources which would be classically not be included in the selection window. Therefore, this enables to reduce the RTT (that is the delay starting from the generation of the FWP by the another user equipment - also referred to as the requesting user equipment - to the reception of the BWP by the another user equipment), and thus stabilize the RTT or at least reduce its instability.

By radio resource selection it is understood selection of radio resources selected to potentially be used by the user equipment for emitting a packet and eventually for retransmitting this packet. These radio resources are selected in the selection window. The radio resources selected may not be used by the user equipment or at least not all of them. The radio resource selection may be performed by previously performing a resource sensing, that is, the user equipment determines the reserved radio resources and the free radio resources in the part of the resource grid corresponding to the selection window. Several resources may be required to send the packet, in that case all the radio resources used to perform the transmission are among the radio resource selected. All the radio resource selected may not be used by the user equipment for transmission of the packet, especially if no retransmission is required.

The Packet Delay Budget also referred to as the Packet Delay Budget of a packet is configured initially by the application involved in the generation of the response packet.

By generation of the response packet it is understood the determination of the packet, the payload data as well as the control data of the response packet. The response packet is determined based on the FWP which requests a response, for example, a geographical position of the user equipment. Thus, the content of the BWP is dependent on the FWP.

In the context of applications performing RTT communication, the BWP is a response to the FWP, containing up to date information. This response may be automatically generated with data of the user equipment, for example, data provided by the application layer or from any other layer. By automatically generating the packet it is understood that the data required to generate the response packet is on the user equipment when it receives the FWP, for example, it does not require the intervention of a user of the user equipment. The data required to generate the response packet is for example representative of the state of the user equipment upon reception of the FWP (or command packet), or representative of a state predictable by the user equipment upon reception of the FWP and is understood to be transmitted in a timely, non-outdated manner.

By last radio resource of the selection window, it is understood the last radio resource in time among the radio resources included in the selection window.

Receiving the received packet may comprise its decoding by the user equipment, the decoding may be performed also using previously received packets, for example when the received packet is a retransmission of these packets. The reception of the FWP may be considered to be the time corresponding to the first resource occupied by the FWP or by a control channel associated to the transmission of the FWP (for example, the slot index representing the beginning of a physical sidelink shared channel carrying the FWP, or the slot index representing the beginning of a physical sidelink control channel scheduling the FWP), thus not including any time related to the duration of the FWP or processing time related to the decoding of the FWP. The reception of the FWP may also be considered to be the time corresponding to the decoding of the control channel scheduling the FWP (or associated to the FWP).

By delay between the reception of a packet and a radio resource it is understood the delay between the one of times defined above (e.g the time at which the packet is sent, the time at which the packet is received, the time at which the packet is retransmitted, etc.) and the end of the time unit hosting the radio resource.

By time duration related to the received packet (FWP) it is understood, any time duration which depends on at least one among a time of generation of the FWP, a time of transmitting of FWP by the another user equipment, a time of reception (or decoding) of FWP by the user equipment, a start of the procedure of resource selection for FWP by the another UE, a time of the first attempt of transmission of the FWP by the another UE or a time of reception (or decoding) of control information associated to the FWP. That is, the time duration dependent on one of these time changes when the time on which it depends is delayed or advanced.

For example, the time duration related to the FWP may be:
- a delay between the generation of the received packet (FWP) by the another user equipment and a reception (or decoding) of the received packet by the user equipment;
- a delay between the generation of FWP by the another user equipment and the transmission of FWP by the another user equipment; and/or
- delay between the start of the procedure of resource selection for FWP by the another UE and the transmission of FWP by the another user equipment.

The time duration may be directly known by the user equipment and thus the user equipment determines it. The time duration may also not be known by the user equipment, for example, the radio resources are determined as satisfying a condition regarding a value and among which are selected the radio resources for the transmission of the BWP may be directly indicated to the user equipment. Therefore, the user equipment performs the radio resource selection based on a set of radio resources that has been indicated to the user equipment.

In the case the user equipment determines the value, the user equipment may determine it based on data received from the another user equipment. This data is dependent on the time duration above mentioned. The value may also be received by the user equipment from the another user equipment.

According to an aspect of the invention, the value is dependent on a target RTT.

This enables to adapt the value to a target RTT which would enhance the performance of the application requiring an RTT for the whole communication loop, that is, a round-trip packet exchange. The target RTT may be known by the user equipment (for example, by receiving the target RTT from a base station or configured with the application). The target RTT may not be known by the user equipment but known by the another user equipment.

For example, if the RTT measured or at least experienced is near or above a sum of the Packet Delay Budget (PDB2), a Packet Delay Budget (PDB1) of the another user equipment and a processing time to generate the response packet starting from the reception of the received packet, the resource selection may be optimized by reducing the RTT to the target RTT. PDB2 is the Packet Delay Budget that would be implemented by the user equipment if the selection window did not depend on the time duration related to the received packet (FWP).

Therefore, it is advantageous to set the target RTT smaller than a sum of the PDB1, the PDB2 and a processing time to generate the response packet starting from the reception of the received packet.

According to an aspect of the invention, the user equipment determines the selection window based on data received from the another user equipment, said data being dependent on a time duration between the generation and the transmission of the received packet (FWP) by the another user equipment.

Therefore, such data enables to take into account the time already elapsed (or at least a good estimation of this time) since the generation of the received packet by the another user equipment. For example, the time remaining to perform the round-trip communication according to the target RTT may be indicated by this data to the user equipment or may be computed by the user equipment based on this data.

By data dependent on a time duration (TD_{E}) between the generation and the transmission of the received packet by the another user equipment it is understood that if this time duration is changed the data will change accordingly.

Such data may directly be the time duration (TD_{E}) which is thus sent to the user equipment. In that case it is advantageous for the user equipment to know the target RTT (for example from the application layer or by a previous transmission, for example via a Base Station, the another user equipment or even a third user equipment). Therefore, the user equipment can easily determine the size of selection window, for example, by subtracting to the target RTT the TD_{E} and eventually the processing time PT_{UE} to generate the response packet (BWP) starting from the reception of the FWP. Subtracting the processing time may be advantageous when the PT_{UE} is important. However, if PT_{UE} is small or negligeable compared to the PDB or if it is taken into consideration in the target RTT such PT_{UE} may not be considered on the user equipment side.

Such data may be a remaining time duration (TD_{R}), that is, a time duration corresponding to the target RTT to which the time duration (TD_{E}) is subtracted. In that case there is no need for the user equipment to know the target RTT. However, in that case it is the another user equipment which knows the target RTT (for example, from the application layer or from a Base Station). The user equipment can easily determine the size of the selection window based on the TD_{R} for example by setting the size of the selection window equal to TD_{R}. The user equipment may also compute the time duration, for example, by subtracting to the TD_{R} the processing time PT_{UE} to obtain a time duration which is more adequate regarding the target RTT.

TD_{R} is dependent on the target RTT.

According to an aspect of the invention, wherein a packet delay budget (PDB) is determined by the user equipment to perform the radio resources selection, said packet delay budget is dependent on the time duration between the generation and the transmission of the received packet (FWP) by the another user equipment.

In that case, the user equipment does not use the packet delay budget (initial packet delay budget) initially received from the upper layers (or that would have been received if the invention was not implemented) to perform the radio resource selection but a new PDB (PDB2'). This new PDB (PDB2') may be a reduced PDB compared to the initial PDB. Therefore, to obtain a selection window dependent on the time duration, the selection window is determined based on this new PDB (PDB2') which also depends on the time duration. This implements a supplementary constraint on the selection compared to a classical radio resource selection.

This reduces the need of adaptation of the user equipment to process the radio resource selection according to the invention, since the radio resource selection can be performed as usual by using the new PDB (PDB2').

According to an aspect of the invention, the user equipment adapts an initial selection window according to the data received from the another user equipment to obtain the selection window.

Usually, to perform a radio resource selection the PDB is used to determine a selection window starting from the generation of the packet, which is to be transmitted. The size of such window is defined by the PDB, for example, the size of this window is equal to the PDB. Instead of having the selection window defined by the PDB, it is defined by the time duration (for example, the size of this window is equal or similar to the time duration). The UE may either modify a selection window previously defined by PDB2 or directly define the selection window based on the time duration.

According to an aspect of the invention, the invention further comprising receiving by the user equipment a preferred set of radio resources to be used in priority for the radio resources selection, wherein the user equipment determines the selection window based on a last radio resource of the preferred set of radio resources.

Therefore, the user equipment determines the selection window based on the last radio resource of the preferred set of radio resources. For example, the last radio resource of the preferred set corresponds to the last radio resource of the selection window.

Since the delay between the last radio resource of the preferred set of radio resources and the reception of the BWP of the response packet is determined according to the time duration, selecting radio resources that are before or at the same time than the last radio resource of the preferred set of radio resources ensures that the selection window is dependent on the time duration.

Advantageously the radio resource selected are selected among the radio resources of the preferred set. Therefore, the UE performs the radio selection based on the set of radio resources, said set indicating the radio resources to be used in priority. This enables to indicate the radio resources which can be used to perform the radio selection to take into account interferences with other user equipment on the another user equipment side.

This set of radio resources is received by the user equipment and can be sent for example by the another user equipment. The set of radio resources is indicated by a data to the user equipment. This data may explicitly indicate the radio resources of the set of radio resources or may give information to the user equipment enabling the user equipment to retrieve the set of radio resources (for example, the sets may be predefined and known by both the user equipment and the another user equipment and each set may be recalled by an specific index).

By radio resources to be used in priority it is understood radio resources that are to be selected if possible by the user equipment. If other radio resources are available or free to perform the radio selection these radio resources are not selected if there are enough radio resources to be used in priority.

According to an aspect of the invention, if the radio resources of the preferred set of radio resources are not available for the user equipment, the radio resources selected are selected among the other radio resources of the selection window.

By not available radio resources it is understood that the user equipment is unable of transmitting data upon said resources (for example, due to half duplex constraints), or that said resources appear as occupied/reserved by other users, or interfered by other users, or otherwise declared as not available for example as a result of the sensing procedure performed by the user equipment.

According to an aspect of the invention, the user equipment determines the selection window based on information included in the control data of the received packet (FWP).

Such information included in the control data may be for example a specific flag/trigger (e.g. indicating the need for transmitting a future response packet after the detection of the contents of the FWP), or indication of retransmission resources, or any other information associated with the FWP.

Therefore, based on the resources for retransmission indicated by the another user equipment the user equipment may perform the selection of radio resources. This enables to perform the selection of radio resources without requiring complementary information. Indeed, the another user equipment which sends the FWP in order to receive the BWP before the end of the target RTT, may send FWP and any other retransmission of the FWP to leave enough time for the user equipment to generate and send the BWP. More specifically, the another user equipment may determine the retransmission radio resources indicated in the control data of the FWP according to the time duration related to the FWP. Thus, the user equipment, based on the retransmission radio resources may determine the selection window which is then dependent on the time duration related to the FWP.

For example, the last radio resource of the radio resources in the selection window may correspond to one of the retransmission radio resources indicated by the information.

For example, the last radio resource of the radio resources in the selection window is before one of the retransmission radio resources indicated, the delay between the last radio resources of the radio resources in the selection window and said one of the retransmission radio resources indicated is equal to an estimated delay of the propagation of the response packet between the user equipment and the another user equipment.

According to an aspect of the invention, the user equipment starts performing the radio resource selection before ending a generation of the response packet (BWP).

The user equipment does not wait full decoding of the FWD or complete generation of the BWP to start the radio resource selection. Therefore, the selection window used to perform the selection may starts at a time (TBR) before the generation of the BWP. The time (TBR) at which the UE starts the selection may for example be the time at which the UE receives the FWP, the time at which the UE decodes the control data of the FWP, the time at which the UE finishes the decoding of FWP or the time at which the UE starts the generation of the BWP.

This enable to reduce the RTT measured since the UE is able to respond to the FWP faster. This is particularly advantageous when the target RTT is short or when the time duration related to the FWP is important, thus, leaving only a short delay to respond while respecting the target RTT.

A second aspect of the invention concerns a computer program product comprising code instructions to perform the method as described previously when said instructions are run by a processor.

A third aspect of the invention concerns a user equipment comprising:
at least a transmit unit configured for receiving and transmitting packets with another user equipment in a D2D communication,
a processor; and
a non-transitory computer-readable medium comprising instructions stored thereon, which when executed by the processor configure the user equipment to:
   - Read a received packet received by the transmit unit and sent by the another user equipment (FWP);
   - Perform radio resource selection used to transmit the response packet (BWP) to respond to the received packet, the radio resources selected are selected among radio resources in a selection window such as the delay between the reception of the received packet and a last radio resource of the radio resources in the selection window is dependent on a time duration related to the received packet (FWP);
   - Instruct the transmit unit to transmit to the another user equipment the response packet using at least one resource among the selected radio resources.

A fourth aspect of the invention concerns a requesting user equipment comprising:
at least a transmit unit configured for receiving and transmitting packets with a responding user equipment in a D2D communication,
a processor; and
a non-transitory computer-readable medium comprising instructions stored thereon, which when executed by the processor configure the requesting user equipment to:
   transmit a first packet requiring a response to the responding user equipment;
   transmit to the responding user equipment data:
      - dependent on a time duration between the generation and the transmission of the first packet by the requesting user equipment; and/or
      - corresponding to:
         ∘ a preferred set of radio resources to be used in priority for radio resources selection, the radio resource selected being selected by the responding user equipment to transmit a second packet to the requesting user equipment in response to the first packet, wherein the delay between the generation of the first packet and a last radio resource of the preferred set of radio resources is dependent on a target Round-Trip Time (RTT), or
         ∘ a radio resource to be used for retransmission of the first packet wherein the delay between the generation of the first packet and radio resource to be used for retransmission of the first packet is dependent on the target Round-Trip Time (RTT).
   receive the second packet in a delay from the generation of the first packet which is dependent of the data transmitted to the responding user equipment.

The present invention is illustrated by way of example, and not by way of limitation, in the figures of the accompanying drawings, in which like reference numerals refer to similar elements and in which:
Figure 1 illustrates two user equipment in a device-to-device communication according to the invention.
Figure 2.1 represents the transmission of the FWP and the transmission of the BWP according to first embodiment.
Figure 2.2 illustrates a flowchart representing the steps for transmitting FWP and BWP according to the first embodiment.
Figure 3.1 represents the transmission of the FWP and the transmission of the BWP according to a second embodiment.
Figure 3.2 illustrates a flowchart representing the steps for transmitting FWP and BWP according to the second embodiment.

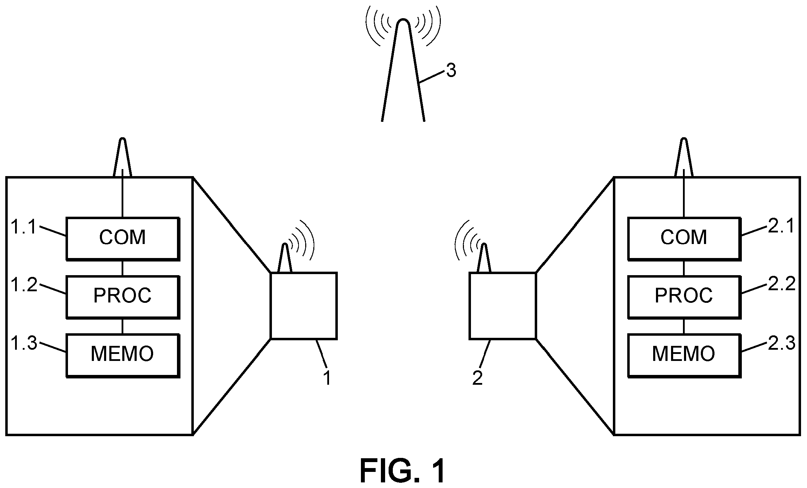

Referring to Figure 1, it is shown two user equipments in a D2D communication, a requesting user equipment 1 (UE1) emitting a radio signal received by a responding user equipment 2 (UE2). The requesting user equipment 1 and/or the responding user equipment 2 may be in the coverage of a base station 3. This D2D communication may be for example an OFDM based transmission. The requesting user equipment 1 and the responding user equipment 2 are mobile devices, that is, these user equipments are involved in a D2D communication, for example, a Vehicle-to-everything (V2X) communication in the context of the standards LTE or NR. More generally, the requesting user equipment 1 and/or the responding user equipment 2 may be any types of mobile user equipment, for example, vehicular communication system, a personal communication equipment (for example a user equipment), etc. The D2D communication is implemented in the context of a forward packet (FWP) which request specific data to UE2, the data requested is sent by UE2 to UE1 in a backward packet (BWP). This specific exchange between UE1 and UE2 is referred to as a round-trip transmission.

The requesting user equipment 1 comprises one communication module (COM) 1.1, one processing module (PROC) 1.2 and a memory unit (MEMO) 1.3. The MEMO 1.3 comprises a non-volatile unit which retrieves the computer program and a volatile unit which retrieves the parameters that may be implemented for the round-trip transmission, for example, the volatile unit may retrieve the PDB (PDB1), a target RTT, a measured RTT, an estimate of the propagation delay between UE1 and UE2, request packet content, TD_{E}, TD_{R}, a preferred set of radio resources, retransmission resources for a specific packet, etc.

The PROC 1.2 is configured to generate a forward packet (FWP) and to configure the COM 1.1 to transmit it to the responding user equipment 2. The PROC 1.2 is also configured to compute the TD_{E}, TD_{R} or to determine a preferred set of radio resources or to determine the retransmission resources for a specific packet. The PROC 1.2 is configured to decode the BWP and to obtain the information requested by FWP.

The COM 1.1 is configured to emit the FWP and eventually retransmit the packet. The COM 1.1 is also configured to receive the BWP.

The responding user equipment 2 comprises one communication module (COM) 2.1, one processing module (PROC) 2.2 and a memory unit (MEMO) 2.3. The MEMO 2.3 comprises a non-volatile unit which retrieves the computer program and a volatile unit which retrieves the parameters that may be implemented for the round-trip transmission, for example, the volatile unit may retrieve the PDB (PDB2), a target RTT, the time duration, an estimate of the propagation delay between UE1 and UE2, request packet content (FWP content), response packet content, TD_{E}, TD_{R}, a preferred set of radio resources, retransmission resources for a specific packet, a new PDB2 (PDB2'), TBR, processing time of the another user equipment, etc.

The PROC 2.2 configures the COM 2.1 to receive and decode the FWP from the UE1. The PROC 2.2 is configured to generate a backward packet (BWP) in response to the FWP and to configure the COM 2.1 to transmit it to UE1. The PROC 2.2 is also configured to compute the time duration (for example TD_{E}, TD_{R}) and/or PDB2'. The PROC 2.2 is also configured to select radio resources among the radio resources of the preferred set of radio resources or based on the retransmission radio resources indicated for FWP. The PROC 2.2 is configured to determine a selection window SW based on the time duration related to FWP. The PROC 2.2 is configured to decode the BWP and to obtain the information requested by FWP.

The COM 2.1 is configured to emit the FWP and eventually retransmit the packet. The COM 2.1 is also configured to receive the BWP.

In Figure 1, it is also shown a base station 3 (BS). UE1 and/or UE2 may be in communication with the BS 3, and thus may receive data from BS 3 via their communication module (COM 1.1 and COM 2.1). For example, UE1 and/or UE2 may receive the target RTT if it is not already configured on UE1 and/or UE2.

In the example of figure 1 only two user equipment are represented. However, the invention is not limited to such one-to-one D2D communication and also encompasses cases where more than one user equipments are intended to receive the FWP and to respond to it.

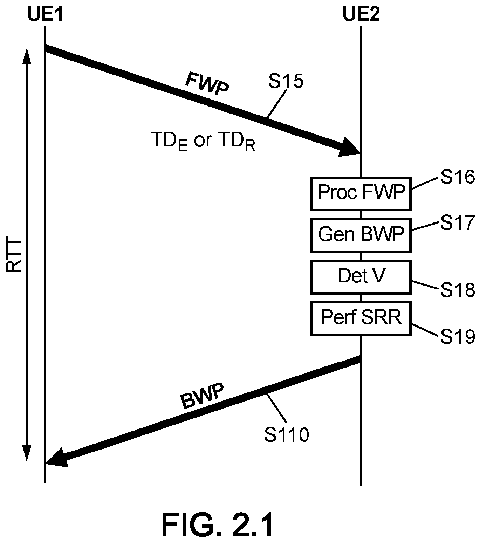

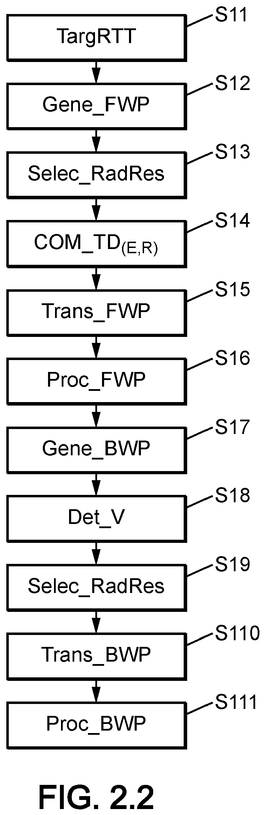

Referring to Figure 2.1, it is shown the transmission of the FWP and the transmission of the BWP according to the invention. Referring to Figure 2.2, it is shown the steps to perform such transmission of the FWP and transmission of the BWP according to the invention.

At step S11, one of the UEs determines the target RTT. For example, the target RTT is sent to it by the BS 3 or the application (that may be installed on both UEs) which requires data from the UE2 may be configured to determine a target RTT, for example, when the RTT measured on the UE1 varies a lot, a target RTT may be determined by UE1 for example by setting target RTT to the average RTT and this can be repeated with the target RTT implemented for several transmission. The application may also be configured directly with a target RTT. In a first case (case 1) the target RTT is at least know by the UE1 and in a second case (case 2) the target RTT is at least know by the UE2.

In case 1, UE1 retrieves the target RTT, said target RTT being obtained from at least one manner described in S11.

In case 2, UE2 retrieves the target RTT, said target RTT being obtained from at least one manner described in S11.

At step S12, UE1 generates the FWP based on the type of information that is requested by UE1. The FWP may require for example a specific information from the UE2, for example, the speed of UE2 or its geographical position.

At step S13, UE1 performs a radio resource selection to send FWP, this step can be performed according to the standard, for example according to M. H. C. Garcia et al., "A Tutorial on 5G NR V2X Communications," in IEEE Communications Surveys & Tutorials, vol. 23, no. 3, pp. 1972-2026.

For example, UE1 retrieves the PDB1 which is assigned to it. UE1 determines a selection window SW1 which starts at the generation of FWD, the size of SW1 being equal to PDB1.

UE1 performs a radio resource sensing to obtain a map of the free radio resources in the resource grid according to SW1.

UE1 then randomly selects radio resources among those free radio resources in the window SW1. These radio resources selected are candidates to be potentially used to transmit the FWP and if necessary to re-transmit the FWP.

At step S14, UE1 determines one of the time durations TD_{E} or TD_{R}. TD_{R} is determined in the case 1 and TD_{E} is determined in the case 2. TD_{E} or TD_{R} are related to FWP and are therefore examples of time durations related to FWP.

In case 2, TD_{E} is computed by UE1. TD_{E} is the time duration between the generation of FWP and the time of the radio resources that will be used to transmit the FWP to UE2. In case of retransmission, other time durations (TD'_{E}, TD"_{E},...) may be computed for each retransmission.

In case 1, UE1 computes TD_{E} and then based on TD_{E} computes TD_{R}. Indeed, TD_{R} is the time duration corresponding to the target RTT to which TD_{E} is subtracted (target RTT- TD_{E}). In case of retransmission, other time durations (TD'_{R}, TD"_{R},...) may be computed for each retransmission.

At step S15, UE1 transmit the FWP to UE2 using some of the radio resources selected at step S13. TD_{E} or TD_{R} is joined or included in the FWP, for example in the control data of FWP.

At step S16, UE2 receives and processes FWP. That is, UE2 decodes FWP, reads the content of FWP to determine the data required and/or interrogates the application layer to obtain the data required. For example, the application layer or another higher layer, or an implementation-specific protocol exchanging data with a positioning or measurement unit determines or retrieves the geographical position of UE2 and sends it to the layer generating the BWP. In addition, UE2 reads the time duration TD_{E} or TD_{R}.

At step S17, UE2 generates BWP. That is, UE2 generates BWP in which the data corresponding to the data required by FWP is inserted in BWP.

At step S18, UE2 determines a value V.

In case 1, the value may be equal to the TD_{R} or equal to TD_{R} to which is subtracted the time processing needed to perform step S16. This time processing may be relatively similar to each user equipment, in that case the target RTT can take into consideration this time processing, that is, the target RTT may be reduced. However, if target RTT does not take into account this time processing, UE2 may compute it and subtract it to the TD_{R}. The duration of the propagation of BWP between UE2 and UE1 may also be considered, however, this duration is short compared to the other durations considered. Therefore, for the sack of simplicity the duration of the propagation of BWP between UE2 and UE1 is considered negligeable.

In case 2, UE2 knows target RTT, UE2 may compute the value by subtracting TD_{E} to the target RTT. As in case 1, in addition to subtracting TD_{E}, the time processing needed to perform step S16 and/or the duration of the propagation of BWP between UE2 and UE1 may also be subtracted. However, as in case 1, the time processing may also be considered directly through the target RTT and the duration of the propagation of BWP between UE2 and UE1 may also be considered negligeable.

When retransmission of the FWP is performed, the value V is computed based on the time duration (TD'_{R}, TD"_{R}, TD'_{E}, TD"_{E},....) transmitted with the last FWP decoded.

At step S19, UE2 performs a radio resource selection to send BWP to UE1.

UE2 may determine a new PDB2 (for example a reduced PDB2, also referred to as PDB2') instead of the PDB2 which would be assigned to it in a classical radio resource selection. PDB2' is chosen equal or similar to the value. Indeed, PDB2' not be equal since it may be a multiple of the time duration of the radio resources whereas the value V may not correspond to such multiple. In that case, the PDB2' may be the smallest (respectively greatest) time duration multiple of a duration of radio resource greater (respectively smaller) than the value V.

UE2 then determines a selection window SW2 which starts at the generation of BWP, the size of SW2 being equal to PDB2'.

The selection window may be determined directly, that is, UE2 may retrieve PDB2 which is assigned to it like in a classical radio resource selection. However, the selection window SW2 may not be determined based on PDB2 or PDB2' but may be directly computed based on the value V. In that case, PDB2' is not computed.

In that case, the size of SW2 may be equal or similar (for the same reason than for the determination of the RPDB2) to the value.

Regardless the way SW2 is determined, UE2 performs a radio resource sensing to obtain a map of the free radio resources in the resource grid according to the SW2.

The selection window SW2 may start before the generation of BWP (more specifically before completion of the generation of BWP). For example, when UE2 receives FWP or when UE2 decodes part or all FWP, the radio resource selection may be started directly, without waiting for BWP to be generated. Therefore, the radio resources are already selected when BWP is generated.

UE2 then randomly selects radio resources among those free radio resources in the window SW2. These radio resource selected are candidates to be potentially used to transmit the BWP and if necessary, to re-transmit the BWP.

At step S110, UE2 transmits the BWP to UE1 using some of the radio resources selected at step S19. The duration between the generation of FWP and the reception by UE1 of BWP corresponds to the duration of a RTT, that is the RTT measured. If the RTT measured is under the target RTT the target RTT may be reduced for the future transmission (UE1 reduces target RTT (case 1) or sends via control data the reduced target RTT to UE2 (case 2), eventually via a BS 3). Therefore, when the measured RTT is stabilized the target RTT can be maintained.

At step S111, UE1 processes BWP, that is, UE1 decodes BWP and reads the data requested by FWP. These data are sent to the application layer. For example, an application performing positioning of UE2 relatively to UE1 will require a reception of these positioning with a certain periodicity. If the RTT measured evolves the moment related to the positioning becomes unprecise and the performance of the application is reduced.

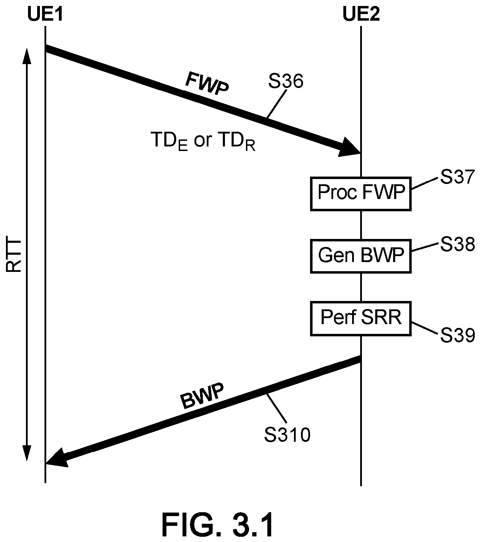

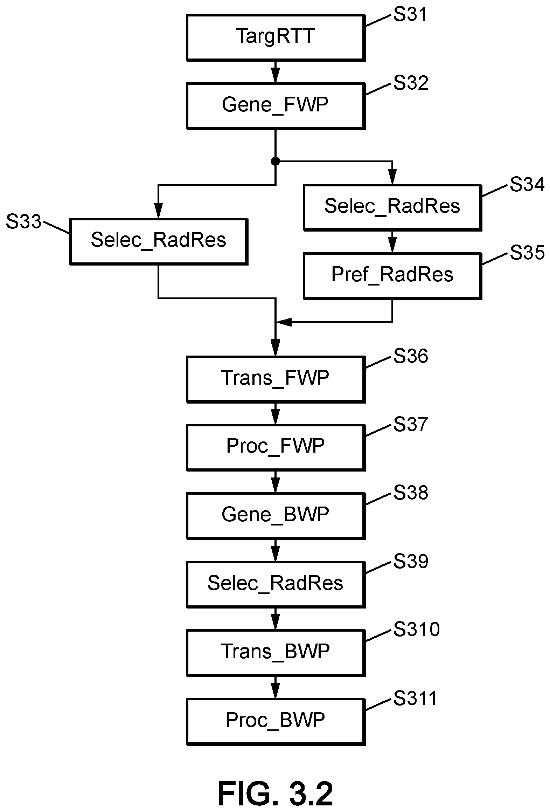

Referring to Figure 3.1, it is shown the transmission of the FWP and the transmission of the BWP according to the invention. Referring to Figure 3.2, it is shown the steps to perform the transmission of the FWP and the transmission of the BWP according to the invention.

At step S31, UE1 determines the target RTT. For example, target RTT is sent to UE1 by the BS 3 or the application which requires data from the UE2 may be configured to determine the target RTT, for example, when the RTT measured at the UE1 varies a lot, a target RTT may be determined by the UE1 for example setting target RTT to the average RTT and this can be repeated once the target RTT is implemented for several transmission. The application may also be configured directly with a target RTT.

At step S32, UE1 generates the FWP based on the type of information that is requested by UE1. The FWP may require, for example, a specific information from UE2, for example, the speed of UE2 or its geographical position.

At step S33, UE1 performs a radio resource selection to send FWP. This step may be performed as in step S13.

For example, UE1 retrieves the PDB1 which is assigned to it. UE1 determines a selection window SW1 which starts at the generation of FWD, the size of SW1 being equal to PDB1.

UE1 performs a radio resource sensing to obtain a map of the free radio resources in the resource grid according to the SW1.

UE1 then randomly selects radio resources among those free radio resources in the window SW1. These radio resource selected are candidates to be potentially used to transmit the FWP and if necessary, the re-transmit the FWP.

Then UE1 performs radio resource allocation for the transmission of FWP, thus UE1 determines the radio resources among these randomly select radio resources that will be used for retransmission of the FWP. UE1 determines the duration between the radio resources used to transmit FWP the first time and the radio resources to be used for at least the first retransmission of FWP, eventually the second retransmission, to be below a value V. UE1 may determine the value V as being target RTT- PDB1, eventually UE1 may also take into consideration the propagation delay between UE1 and UE2 and the processing time at UE2. Therefore, when UE2 receives FWP before retransmission of FWP, UE2 can perform the radio resource selection for BWP according to the radio resources indicated in the control data of FWP for retransmission, for example, selecting radio resources before the radio resources indicated for retransmission (or eventually for a second retransmission if the duration between the radio resources used to transmit FWP the first time and the radio resources to be used for the second retransmission of FWP is set to be below the value V).

At step S34, UE1 performs a radio resource selection to send FWP. This step may be performed as in step S13.

For example, UE1 retrieves the PDB1 which is assigned to it. UE1 determines a selection window SW1 which starts at the generation of FWD, the size of SW1 being equal to PDB1.

UE1 performs a radio resource sensing to obtain a map of the free radio resources in the resource grid according to the SW1.

UE1 then randomly selects radio resources among those free radio resources in the window SW1. These radio resource selected are candidates to be potentially used to transmit the FWP and if necessary, the re-transmit the FWP.

UE1 allocates a radio resource for the transmission of FWP.

At step S35, UE1 determines a preferred set of radio resources to be used in priority by UE2 for sending BWP.

For this, UE1 determines TD_{R} as in step 14, eventually UE1 may also take into consideration the propagation delay between UE1 and UE2, therefore subtracting to TD_{R} this delay. However, for the sack of conciseness such propagation delay is considered negligeable and only TD_{R} is considered. UE1 may determine the radio resources of the preferred set of radio resources, such as, all the radio resources of the preferred set are at a delay from the radio resources allocated for the transmission of FWP below TD_{R}.

The steps S34 and S35 are implemented as alternative steps with step S33.

At step S36, UE1 transmit the FWP to UE2 using some of the radio resources selected at step S33 or S34. In case the steps S34 and S35 are performed, the preferred set is joined to FWP. In case step S33 is performed, the radio resources to be used for retransmission of FWP are indicated in the control data of FWP.

At step S37, UE2 receives and processes FWP. That is, UE2 decodes FWP, reads the content of FWP to determine the data required and interrogates the application layer to obtain the data required, or obtains the required data from an external module or from another communication layer. For example, the application layer determines or retrieve the geographical position of UE2 and sends it to the layer generating the BWP.

In case steps S34 and S35 are performed, UE2 identifies the preferred set of radio resources.

In case step S33 is performed, UE2 identifies the radio resources indicated for retransmission of FWP.

At step S38, UE2 generates BWP. That is UE2 generates BWP in which the data corresponding to the data required by FWP is inserted in BWP.

At step S39, UE2 performs a radio resource selection to send BWP to UE1.

In case steps S34 and S35 are performed, UE2 performs a radio resource selection based on the radio resources indicated in the set of preferred radio resources.

For example, UE2 determines a selection window SW2 which starts at the generation of BWP, the last resource of SW2 being before or at the same time than the last radio resource of the set of preferred radio resources.

UE2 then performs a radio resource sensing to obtain a map of the free radio resources among the radio resources of the set of preferred radio resources that are in SW2. If there are no free radio resources available in SW2 among the radio resources of the set of preferred radio resources, then UE2 performs a radio resource sensing to obtain a map of the free radio resources in the resource grid that are in SW2.

UE2 then randomly selects radio resources among the free radio resources sensed. These radio resources selected are candidates to be potentially used to transmit the BWP and if necessary, to re-transmit the BWP.

Since the radio resources of the preferred set of radio resources are at a delay from the radio resource allocated for the transmission of FWP below TD_{R}, and since the generation of BWP comes after the reception of the FWP, the radio resources that will be used by UE2 to transmit BWP are at a delay from the generation of BWP below TD_{R} which can be considered as a time duration related to FWP.

In case step S33 is performed, UE2 performs a radio resource selection according to the radio resources indicated in the control data of FWP regarding the radio resources used to retransmit the FWP.

For example, UE2 determines the selection window SW2 which starts at the generation of BWP and ends by the radio resources indicated for retransmission (the first or second retransmission depending on the duration between these radio resources and the radio resources used to transmit FWP the first time).

UE2 then performs a radio resource sensing to obtain a map of the free radio resources in the resource grid that are in SW2.

UE2 then randomly selects radio resources among those free radio resources in the window SW2. These radio resource selected are candidates to be potentially used to transmit the BWP and if necessary, to re-transmit the BWP.

Since the duration between the radio resources indicated for retransmission and the radio resources used to transmit FWP the first time is chosen by UE1 to be below the value V determined at step S33, and since the radio resources selected come before or at the same time than the radio resources indicated for retransmission, the radio resources that will be used by UE2 to transmit BWP are at a delay from the transmission of FWP below target RTT- PDB1.

In both cases, the selection window SW2 may start before the generation of BWP (more specifically before the completion of the generation of BWP). For example, when UE2 receives FWP or when UE2 decodes part or all FWP, the radio resource selection may be started directly, without waiting for BWP to be generated. Therefore, the radio resources are already selected when BWP is generated.

At step S310, UE2 transmits the BWP to UE1 using some of the radio resources selected at step S39. Due to the value V or to the TD_{R} used in the embodimentof figures 3.1 and 3.2, the duration between the generation of FWP and the reception by UE1 of BWP can be maintained below the target RTT.

At step S311, UE1 processes BWP, that is, UE1 decodes BWP and reads the data requested by FWP. These data are sent to the application layer. For example, an application performing positioning of UE2 relatively to UE1 will require a reception of these positioning with a certain periodicity. If the RTT measured evolves the moment related to the positioning becomes unprecise and the performance of the application is reduced.

## Claims

1. Method to transmit by a user equipment a response packet «BWP» in response to a received packet «FWP» received from another user equipment in a D2D communication, comprising:
Receive from the another user equipment by the user equipment the received packet «FWP»;
Perform by the user equipment radio resource selection used to transmit the response packet «BWP», the radio resources selected are selected among radio resources in a selection window such as the delay between the reception of the received packet «FWP» and a last radio resource of the radio resources in the selection window is dependent on a target Round-Trip Time «RTT» ;
Send by the user equipment to the another user equipment the response packet using at least one resource among the selected radio resources.

2. Method according to any one of claims1 wherein the user equipment determines the selection window based on data received from the another user equipment, said data being dependent on a time duration between the generation and the transmission of the received packet «FWP» by the another user equipment.

3. Method according to claim 2 wherein a packet delay budget «PDB» is determined by the user equipment to perform the radio resources selection, said packet delay budget is dependent on the time duration between the generation and the transmission of the received packet «FWP» by the another user equipment.

4. Method according to claim 2 wherein the user equipment adapts an initial selection window according to the data received from the another user equipment to obtain the selection window.

5. Method according to claim 1 further comprising receiving by the user equipment a preferred set of radio resources to be used in priority for the radio resources selection, wherein the user equipment determines the selection window based on a last radio resource of the preferred set of radio resources.

6. Method according to claim 5 wherein if the radio resources of the preferred set of radio resources are not available for the user equipment, the radio resources selected are selected among the other radio resources of the selection window.

7. Method according to claim 1 wherein the user equipment determines the selection window based on information included in the control data of the received packet «FWP».

8. Method according to claim 7 wherein the last radio resource of the radio resources in the selection window corresponds to one of the retransmission radio resources indicated by the information.

9. Method according to claim 7 wherein the last radio resource of the radio resources in the selection window is before one of the retransmission radio resources indicated, the delay between the last radio resources of the radio resources in the selection window and said one of the retransmission radio resources indicated is equal to an estimated delay of the propagation of the response packet between the user equipment and the another user equipment.

10. Method according to any one of the previous claims wherein the user equipment starts performing the radio resource selection before ending a generation of the response packet «BWP».

11. A computer program product, comprising instructions for performing the method as claimed in any one of claims 1 to 10, when run by a processor.

12. A user equipment comprising:
at least a transmit unit configured for receiving and transmitting packets with another user equipment in a D2D communication,
a processor; and
a non-transitory computer-readable medium comprising instructions stored thereon, which when executed by the processor configure the user equipment to:
- Read a received packet «FWP» received by the transmit unit and sent by the another user equipment;
- Perform radio resource selection used to transmit the response packet «BWP» to respond to the received packet, the radio resources selected are selected among radio resources in a selection window such as the delay between the reception of the received packet and a last radio resource of the radio resources in the selection window is dependent on a target Round-Trip Time «RTT»;
- Instruct the transmit unit to transmit to the another user equipment the response packet using at least one resource among the selected radio resources.

13. A requesting user equipment comprising:
at least a transmit unit configured for receiving and transmitting packets with a responding user equipment in a D2D communication,
a processor; and
a non-transitory computer-readable medium comprising instructions stored thereon, which when executed by the processor configure the requesting user equipment to:
transmit a first packet requiring a response to the responding user equipment;
transmit to the responding user equipment data corresponding to:
∘ a preferred set of radio resources to be used in priority for radio resources selection, the radio resource selected being selected by the responding user equipment to transmit a second packet to the requesting user equipment in response to the first packet, wherein a delay between the generation of the first packet and a last radio resource of the preferred set of radio resources is dependent on a target Round-Trip Time «RTT», or
∘ a radio resource to be used for retransmission of the first packet wherein the delay between the generation of the first packet and radio resource to be used for retransmission of the first packet is dependent on the target Round-Trip Time «RTT» ;
receive the second packet in a delay from the generation of the first packet which is dependent of the data transmitted to the responding user equipment.

## Patentansprüche

1. Verfahren zur Übertragung eines Antwortpakets «BWP» durch ein Benutzergerät als Antwort auf ein empfangenes Paket «FWP», welches von einem anderen Benutzergerät in einer D2D-Kommunikation empfangen wurde, umfassend:
Empfangen des empfangenen Pakets «FWP» von dem anderen Benutzergerät durch das Benutzergerät;
Durchführen einer Funkressourcenauswahl durch das Benutzergerät, welche zur Übertragung des Antwortpakets «BWP» verwendet wird, wobei die ausgewählten Funkressourcen unter den Funkressourcen in einem Auswahlfenster derart ausgewählt werden, dass die Verzögerung zwischen dem Empfang des empfangenen Pakets «FWP» und einer letzten Funkressource der Funkressourcen in dem Auswahlfenster von einer Ziel-Rundlaufzeit «RTT» abhängig ist;
Senden des Antwortpakets durch das Benutzergerät an das andere Benutzergerät unter Verwendung wenigstens einer Ressource unter den ausgewählten Funkressourcen.

2. Verfahren nach Anspruch 1, wobei das Benutzergerät das Auswahlfenster auf Grundlage von Daten bestimmt, welche von dem anderen Benutzergerät empfangen wurden, wobei die Daten von einer Zeitdauer zwischen der Erzeugung und der Übertragung des empfangenen Pakets «FWP» durch das andere Benutzergerät abhängig sind.

3. Verfahren nach Anspruch 2, wobei ein Paketverzögerungsbudget «PDB» durch das Benutzergerät bestimmt wird, um die Funkressourcenauswahl durchzuführen, wobei das Paketverzögerungsbudget von der Zeitdauer zwischen der Erzeugung und der Übertragung des empfangenen Pakets «FWP» durch das andere Benutzergerät abhängig ist.

4. Verfahren nach Anspruch 2, wobei das Benutzergerät ein anfängliches Auswahlfenster gemäß den von dem anderen Benutzergerät empfangenen Daten anpasst, um das Auswahlfenster zu erhalten.

5. Verfahren nach Anspruch 1, ferner umfassend ein Empfangen eines bevorzugten Satzes von Funkressourcen durch das Benutzergerät, welche bei der Funkressourcenauswahl vorrangig zu verwenden sind, wobei das Benutzergerät das Auswahlfenster auf Grundlage einer letzten Funkressource des bevorzugten Satzes von Funkressourcen bestimmt.

6. Verfahren nach Anspruch 5, wobei, falls die Funkressourcen des bevorzugten Satzes von Funkressourcen für das Benutzergerät nicht verfügbar sind, die ausgewählten Funkressourcen unter den anderen Funkressourcen des Auswahlfensters ausgewählt werden.

7. Verfahren nach Anspruch 1, wobei das Benutzergerät das Auswahlfenster auf Grundlage von Informationen bestimmt, welche in den Steuerdaten des empfangenen Pakets «FWP» enthalten sind.

8. Verfahren nach Anspruch 7, wobei die letzte Funkressource der Funkressourcen in dem Auswahlfenster einer der durch die Informationen angegebenen Funkressourcen zur Neuübertragung entspricht.

9. Verfahren nach Anspruch 7, wobei die letzte Funkressource der Funkressourcen in dem Auswahlfenster vor einer der angegebenen Funkressourcen zur Neuübertragung liegt, wobei die Verzögerung zwischen der letzten Funkressource der Funkressourcen in dem Auswahlfenster und der einen der angegebenen Funkressourcen zur Neuübertragung gleich einer geschätzten Verzögerung der Ausbreitung des Antwortpakets zwischen dem Benutzergerät und dem anderen Benutzergerät ist.

10. Verfahren nach einem der vorherigen Ansprüche, wobei das Benutzergerät mit der Durchführung der Funkressourcenauswahl beginnt, bevor eine Erzeugung des Antwortpakets «BWP» beendet ist.

11. Computerprogrammprodukt, umfassend Anweisungen zur Durchführung des Verfahrens nach einem der Ansprüche 1 bis 10, wenn es von einem Prozessor ausgeführt wird.

12. Benutzergerät, umfassend:
wenigstens eine Übertragungseinheit, welche dazu eingerichtet ist, Pakete mit einem anderen Benutzergerät in einer D2D-Kommunikation zu empfangen und zu übertragen,
einen Prozessor; und
ein nicht-transitorisches computerlesbares Medium, welches darauf gespeicherte Anweisungen umfasst, welche, wenn sie von dem Prozessor ausgeführt werden, das Benutzergerät dazu einrichten:
- ein empfangenes Paket «FWP» zu lesen, welches von der Übertragungseinheit empfangen und von dem anderen Benutzergerät «FWP» gesendet wurde;
- eine Funkressourcenauswahl durchzuführen, welche zur Übertragung des Antwortpakets «BWP» als Antwort auf das empfangene Paket verwendet wird, wobei die ausgewählten Funkressourcen unter den Funkressourcen in einem Auswahlfenster derart ausgewählt werden, dass die Verzögerung zwischen dem Empfang des empfangenen Pakets und einer letzten Funkressource der Funkressourcen in dem Auswahlfenster von einer Ziel-Rundlaufzeit «RTT» abhängig ist;
- die Übertragungseinheit anzuweisen, das Antwortpaket unter Verwendung wenigstens einer Ressource unter den ausgewählten Funkressourcen an das andere Benutzergerät zu übertragen.

13. Anforderndes Benutzergerät, umfassend:
wenigstens eine Übertragungseinheit, welche dazu eingerichtet ist, Pakete mit einem antwortenden Benutzergerät in einer D2D-Kommunikation zu empfangen und zu übertragen,
einen Prozessor; und
ein nicht-transitorisches computerlesbares Medium, welches darauf gespeicherte Anweisungen umfasst, welche, wenn sie von dem Prozessor ausgeführt werden, das anfordernde Benutzergerät dazu einrichten:
ein erstes Paket, welches eine Antwort erfordert, an das antwortende Benutzergerät zu übertragen;
Daten an das antwortende Benutzergerät zu übertragen welche entsprechen:
∘ einem bevorzugten Satz von Funkressourcen, welche bei einer Funkressourcenauswahl vorrangig zu verwenden sind, wobei die ausgewählte Funkressource durch das antwortende Benutzergerät ausgewählt wird, um ein zweites Paket als Antwort auf das erste Paket an das anfordernde Benutzergerät zu übertragen, wobei die Verzögerung zwischen der Erzeugung des ersten Pakets und einer letzten Funkressource des bevorzugten Satzes von Funkressourcen von einer Ziel-Rundlaufzeit «RTT» abhängig ist, oder
∘ einer Funkressource, welche zur Neuübertragung des ersten Pakets zu verwenden ist, wobei die Verzögerung zwischen der Erzeugung des ersten Pakets und der zur Neuübertragung des ersten Pakets zu verwendenden Funkressource von der Ziel-Rundlaufzeit «RTT» abhängig ist;
das zweite Paket in einer Verzögerung ab der Erzeugung des ersten Pakets zu empfangen, welche von den an das antwortende Benutzergerät übertragenen Daten abhängig ist.

## Revendications

1. Procédé de transmission par un équipement utilisateur d'un paquet de réponse « BWP » en réponse à un paquet reçu « FWP » reçu d'un autre équipement utilisateur dans une communication D2D, comprenant :
la réception, depuis l'autre équipement utilisateur par l'équipement utilisateur, du paquet reçu « FWP » ;
la réalisation, par l'équipement utilisateur, d'une sélection de ressource radio utilisée pour transmettre le paquet de réponse « BWP », les ressources radio sélectionnées sont sélectionnées parmi des ressources radio dans une fenêtre de sélection de sorte que le retard entre la réception du paquet reçu « FWP » et une dernière ressource radio des ressources radio dans la fenêtre de sélection dépende d'un temps aller-retour « RTT » cible ;
l'envoi, par l'équipement utilisateur à l'autre équipement utilisateur, du paquet de réponse à l'aide d'au moins une ressource parmi les ressources radio sélectionnées.

2. Procédé selon la revendication 1, dans lequel l'équipement utilisateur détermine la fenêtre de sélection sur la base de données reçues de l'autre équipement utilisateur, lesdites données dépendant d'une durée entre la génération et la transmission du paquet reçu « FWP » par l'autre équipement utilisateur.

3. Procédé selon la revendication 2, dans lequel un budget de retard de paquet « PDB » est déterminé par l'équipement utilisateur pour réaliser la sélection de ressources radio, ledit budget de retard de paquet dépend de la durée entre la génération et la transmission du paquet reçu « FWP » par l'autre équipement utilisateur.

4. Procédé selon la revendication 2, dans lequel l'équipement utilisateur adapte une fenêtre de sélection initiale en fonction des données reçues de l'autre équipement utilisateur pour obtenir la fenêtre de sélection.

5. Procédé selon la revendication 1, comprenant en outre la réception, par l'équipement utilisateur, d'un ensemble préféré de ressources radio à utiliser en priorité pour la sélection de ressources radio, dans lequel l'équipement utilisateur détermine la fenêtre de sélection sur la base d'une dernière ressource radio de l'ensemble préféré de ressources radio.

6. Procédé selon la revendication 5, dans lequel, si les ressources radio de l'ensemble préféré de ressources radio ne sont pas disponibles pour l'équipement utilisateur, les ressources radio sélectionnées sont sélectionnées parmi les autres ressources radio de la fenêtre de sélection.

7. Procédé selon la revendication 1, dans lequel l'équipement utilisateur détermine la fenêtre de sélection sur la base d'informations incluses dans les données de commande du paquet reçu « FWP ».

8. Procédé selon la revendication 7, dans lequel la dernière ressource radio des ressources radio dans la fenêtre de sélection correspond à l'une des ressources radio de retransmission indiquées par les informations.

9. Procédé selon la revendication 7, dans lequel la dernière ressource radio des ressources radio dans la fenêtre de sélection est avant l'une des ressources radio de retransmission indiquées, le retard entre les dernières ressources radio des ressources radio dans la fenêtre de sélection et ladite ressource radio des ressources radio de retransmission indiquées est égal à un retard estimé de la propagation du paquet de réponse entre l'équipement utilisateur et l'autre équipement utilisateur.

10. Procédé selon l'une quelconque des revendications précédentes, dans lequel l'équipement utilisateur commence à réaliser la sélection de ressource radio avant de terminer une génération du paquet de réponse « BWP ».

11. Produit de programme informatique, comprenant des instructions pour réaliser le procédé selon l'une quelconque des revendications 1 à 10, lorsqu'elles sont exécutées par un processeur.

12. Équipement utilisateur comprenant :
au moins une unité d'émission configurée pour recevoir et transmettre des paquets avec un autre équipement utilisateur dans une communication D2D,
un processeur ; et
un support non transitoire lisible par ordinateur comprenant des instructions stockées sur celui-ci, qui, lorsqu'elles sont exécutées par le processeur, configurent l'équipement utilisateur pour :
- lire un paquet reçu « FWP » reçu par l'unité d'émission et envoyé par l'autre équipement utilisateur ;
- réaliser une sélection de ressource radio utilisée pour transmettre le paquet de réponse « BWP » pour répondre au paquet reçu, les ressources radio sélectionnées sont sélectionnées parmi des ressources radio dans une fenêtre de sélection de sorte que le retard entre la réception du paquet reçu et une dernière ressource radio des ressources radio dans la fenêtre de sélection dépende d'un temps aller-retour « RTT » cible ;
- demander à l'unité d'émission de transmettre, à l'autre équipement utilisateur, le paquet de réponse à l'aide d'au moins une ressource parmi les ressources radio sélectionnées.

13. Équipement utilisateur de demande comprenant :
au moins une unité d'émission configurée pour recevoir et transmettre des paquets avec un équipement utilisateur de réponse dans une communication D2D,
un processeur ; et
un support non transitoire lisible par ordinateur comprenant des instructions stockées sur celui-ci, qui, lorsqu'elles sont exécutées par le processeur, configurent l'équipement utilisateur de demande pour :
transmettre un premier paquet nécessitant une réponse à l'équipement utilisateur de réponse ;
transmettre, à l'équipement utilisateur de réponse, des données correspondant à :
∘ un ensemble préféré de ressources radio à utiliser en priorité pour la sélection de ressources radio, la ressource radio sélectionnée étant sélectionnée par l'équipement utilisateur de réponse pour transmettre un second paquet à l'équipement utilisateur de demande en réponse au premier paquet, dans lequel un retard entre la génération du premier paquet et une dernière ressource radio de l'ensemble préféré de ressources radio dépend d'un temps aller-retour « RTT » cible, ou
∘ une ressource radio à utiliser pour une retransmission du premier paquet, dans lequel le retard entre la génération du premier paquet et la ressource radio à utiliser pour une retransmission du premier paquet dépend du temps aller-retour « RTT » cible, recevoir le second paquet dans un retard à partir de la génération du premier paquet qui dépend des données transmises à l'équipement utilisateur de réponse.
